# DEMANDE DE BREVET EUROPEEN

(11) **EP 4 191 847 A1**
(43) Date de publication de la demande: **07.06.2023**
(21) Numéro de dépôt: 22210756.7
(22) Date de dépôt: 01.12.2022
(51) Int. Cl.: H02K 35/02, H02K 1/34

(54) **TRANSDUCTEUR ELECTROMAGNETIQUE POUR LA RECUPERATION D'ENERGIE VIBRATOIRE**

(30) Priorité: 02.12.2021 FR 2112868
(71) Demandeur: COMMISSARIAT À L'ÉNERGIE ATOMIQUE ET AUX ÉNERGIES ALTERNATIVES, 75015 Paris (FR)
(72) Inventeur: DELATTRE, Gallien, 38054 GRENOBLE Cedex 9 (FR); BOISSEAU, Sébastien, 38054 GRENOBLE Cedex 9 (FR); VIGNE, Sébastien, 91297 ARPAJON Cedex (FR); BRENES, Alexis, 92370 CHAVILLE (FR)
(74) Mandataire: Atout PI Laplace

(57) **Abrégé**

La présente invention concerne un transducteur électromagnétique pour la récupération d'énergie vibratoire. Particulièrement, l'invention concerne un transducteur électromagnétique comprenant un support, une masse centrale, et au moins un ressort reliant la masse centrale au support, le ressort permettant le déplacement de la masse centrale par rapport au support selon un premier axe. La présente invention concerne également un ensemble de transducteurs électromagnétiques.

## Description

### Domaine de l'invention

La présente invention concerne un transducteur électromagnétique pour la récupération d'énergie vibratoire. Particulièrement, l'invention concerne un transducteur électromagnétique comprenant un support, une masse centrale, et au moins un ressort reliant la masse centrale au support, le ressort permettant le déplacement de la masse centrale par rapport au support selon un premier axe. La présente invention concerne également un ensemble de transducteurs électromagnétiques.

### Art antérieur

Les récupérateurs d'énergie vibratoire ont pour fonction d'alimenter électriquement des systèmes électroniques à partir des vibrations présentes dans leur environnement. Ceux-ci nécessitent moins de maintenance et engendrent moins de pollution que les batteries et sont particulièrement intéressants lorsque le système à alimenter se situe dans un endroit inaccessible, privé de lumière et de gradient thermique suffisant. Cependant l'industrialisation et la mise sur le marché de ces récupérateurs d'énergie vibratoire est verrouillée par leur robustesse encore insuffisante. En effet, bien que de nombreux récupérateurs soient théoriquement en mesure de fournir la puissance requise par leur application (alimentation de systèmes électroniques très basse consommation), ceux-ci sont souvent incapables de s'adapter aux fluctuations fréquentielles des sources vibratoires réelles. De plus ces récupérateurs d'énergie vibratoire sont utilisés dans des environnements sujets aux changements de température alors que ces récupérateurs sont inadaptés à de telles variations. Egalement, les récupérateurs d'énergie vibratoire résistent difficilement au vieillissement de leurs éléments constitutifs. Pour corriger ces problèmes sans faire chuter significativement leur densité de puissance (comme c'est souvent le cas concernant les stratégies à base d'ajustement mécanique, de système multimodes, ou encore de systèmes non résonants), l'une des pistes les plus prometteuses est l'ajustement électrique. Cette méthode consiste à maximiser le transfert de puissance entre la source vibratoire et la charge électrique, non seulement à la résonance (quand la fréquence de la vibration coïncide avec la fréquence de résonance naturelle du résonateur mécanique) mais aussi hors résonance, au moyen d'un circuit d'adaptation d'impédance situé au niveau de la charge électrique. Il en résulte un accroissement de la bande-passante effective du récupérateur, rendant donc ce dernier plus robuste aux conditions réelles d'utilisation.

L'impact de l'ajustement électrique sur la bande-passante dépend premièrement du type de transducteur réalisant la conversion énergétique, le type de transducteur déterminant les équations physiques régissant le comportement du récupérateur. Notamment, il existe des transducteurs piézoélectriques et des transducteurs électromagnétiques. Secondement, l'ajustement électrique sur la bande-passante dépend des paramètres caractéristiques du récupérateur tels que la masse mobile rapportée au volume total (densité effective du récupérateur), le facteur de qualité mécanique, la fréquence de résonance mécanique, et le couplage. On parle de couplage piézoélectrique dans le cas d'un transducteur piézoélectrique, et de couplage électromagnétique dans le cas d'un transducteur électromagnétique.

Dans le cas des transducteurs piézoélectriques, d'excellentes performances ont déjà été atteintes (bande-passante à -3dB supérieure à 10%) au moyen de récupérateurs fortement couplés associés à des circuits d'extraction très performants. Dans le cas des transducteurs électromagnétiques, de telles performances sont plus difficiles à atteindre à cause de leur couplage électromagnétique généralement trop faible. En condition de petit déplacement de la masse mobile autour d'un point de fonctionnement, la dérivée du flux magnétique dans le bobinage par rapport au déplacement du mobile s'appelle le coefficient de transduction électromagnétique, et le couplage d'un récupérateur électromagnétique peut être défini comme le carré de ce coefficient divisé par la résistance interne de la bobine et par le volume total du récupérateur. En d'autres termes, les performances des récupérateurs électromagnétiques sont limitées par le fait que, pour un déplacement donné du mobile, la variation de flux magnétique est souvent trop faible pour que la méthode d'ajustement électrique augmente significativement la bande-passante effective du récupérateur. Les performances de la stratégie d'ajustement électrique sont donc meilleures pour les récupérateurs piézoélectriques.

Cependant les récupérateurs électromagnétiques présentent des avantages décisifs sur d'autres plans tels que la maturité technologique des procédés de fabrication, le coût, la résistance mécanique vis-à-vis des chocs et de l'utilisation sur le long terme, etc. C'est pourquoi le développement de récupérateurs de type électromagnétique demeure pertinent.

### Description brève de l'invention

L'invention vise à pallier tout ou partie des problèmes cités plus haut en proposant un transducteur électromagnétique permettant un fort couplage, significativement plus élevé que les récupérateurs électromagnétiques connus, ainsi qu'une densité effective élevée. Ainsi, l'invention vise à atteindre de meilleures performances en termes de bande-passante et de densité de puissance avec la méthode d'ajustement électrique.

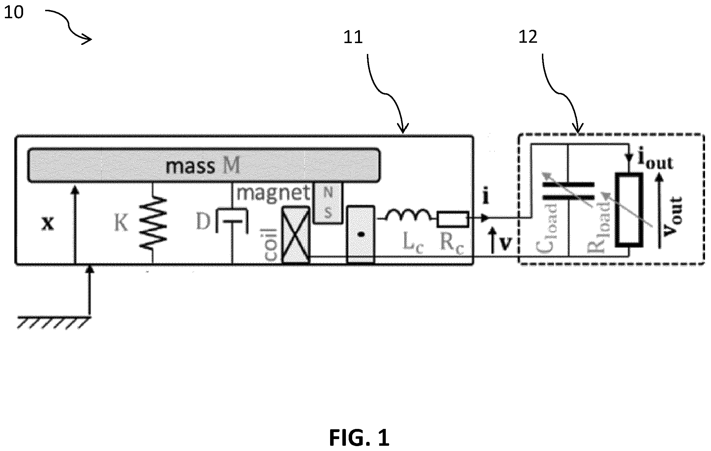

La méthode d'ajustement électrique se base sur le théorème de maximisation du transfert de puissance entre une source et une charge quelconques. D'après ce théorème, la puissance transférée est maximale quand l'impédance de la charge est égale au complexe conjugué de l'impédance de la source. La figure 1 représente un modèle générique 10 décrivant le comportement des récupérateurs à transduction électromagnétique 11 sous hypothèse de petits déplacements, associés à un circuit d'adaptation d'impédance 12. Le récupérateur, délivrant la tension v et le courant i, est assimilé à la source tandis que le circuit d'adaptation constitue la charge. En contrôlant adéquatement les valeurs de condensateur C_{load} et de résistance R_{load} selon la fréquence d'entrée, il est possible de se placer dans les conditions du théorème à la résonance naturelle du récupérateur mais aussi hors résonance.

Certains dispositifs connus sont basés sur le déplacement relatif d'une source de champ magnétique par rapport à un bobinage. Le déplacement, e.g. la translation ou la rotation, d'un champ magnétique créé par un aimant entraîne une variation du flux magnétique dans un bobinage. Pour obtenir une dérivée du flux magnétique la plus forte possible avec ce type de dispositifs, il faut utiliser un guide ferromagnétique solidaire de l'aimant afin de canaliser les lignes du champ magnétique à l'endroit par lequel passe la bobine, tout en réduisant l'entrefer du circuit magnétique à son strict minimum. Cet entrefer minimal est l'épaisseur de la bobine (simplement parce que si l'entrefer était moins épais que l'épaisseur de la bobine, cette dernière ne pourrait plus passer au travers de l'ensemble constitué du guide ferromagnétique et de l'aimant). La bobine, quant à elle, doit être dimensionnée adéquatement pour maximiser la dérivée du flux magnétique en son sein. Notamment, une bobine trop peu épaisse conduit à une dérivée du flux magnétique trop faible même avec le guide ferromagnétique. Par conséquent, un compromis doit être trouvé entre l'épaisseur de l'entrefer et celle de la bobine, et ce compromis conduit à un couplage électromagnétique significativement inférieur au couplage électromagnétique atteignable avec les transducteurs basés sur une variation de champ magnétique (transducteurs pour lesquels l'épaisseur de l'entrefer est indépendante de l'épaisseur de la bobine). En revanche, les récupérateurs basés sur le déplacement relatif d'une source magnétique par rapport à un bobinage ont l'avantage de ne pas générer de force magnétique entre le mobile et la base du récupérateur, cette force étant à l'origine de difficultés de modélisation (calcul analytique complexe, non-linéarité), de conception et de fabrication. Notamment, il y a des possibilités de collage pendant la phase d'assemblage ou d'utilisation, ou la génération de frottements secs, etc.

Certains récupérateurs sont des transducteurs basés sur une variation de la forme ou de l'intensité du champ magnétique créé par l'aimant. Il s'agit des transducteurs pour lesquels la variation de flux magnétique dans le bobinage est provoquée par une modification du champ magnétique créé par l'aimant au moyen d'éléments ferromagnétiques en mouvement par rapport à celui-ci. Le déplacement d'un mobile provoque une variation de l'épaisseur des entrefers, i.e. distance séparant le mobile du reste du guide ferromagnétique contenant les aimants. Cette variation d'entrefer entraîne une variation de la reluctance du circuit magnétique alimenté par les aimants, de sorte que le flux capté par la bobine est maximal quand le mobile est dans une position telle que l'entrefer est faible, et minimal dans une position telle que l'entrefer est élevé. Cependant, de tels dispositifs demandent une attention particulière concernant la force magnétique car celle-ci peut engendrer du collage ou du frottement sec si aucune disposition n'est prise pendant la conception du récupérateur.

L'invention vise à pallier les problèmes cités précédemment en proposant un transducteur électromagnétique significativement moins sujet à du collage ou du frottement sec et qui est particulièrement compact.

A cet effet, l'invention a pour objet un transducteur électromagnétique comprenant un support, une masse centrale, et au moins un ressort reliant la masse centrale au support, le ressort permettant le déplacement de la masse centrale par rapport au support selon un premier axe ; la masse centrale comprenant un élément ferromagnétique central, un premier aimant, un second aimant, et deux éléments ferromagnétiques supplémentaires, l'élément ferromagnétique étant flanqué d'un premier côté selon le premier axe par le premier aimant et flanqué d'un second côté, opposé au premier côté selon le premier axe, par le second aimant, le premier aimant et le second aimant étant chacun flanqué selon le premier axe par un des éléments ferromagnétiques supplémentaires ; le support entourant la masse centrale radialement au premier axe et un entrefer séparant le support de la masse centrale, le support comprenant au moins une bobine enroulée autour du premier axe et solidaire d'un élément ferromagnétique externe ; le transducteur électromagnétique étant configuré de manière à ce que le flux magnétique du premier aimant et le flux magnétique du second aimant suivent chacun un trajet parmi un premier trajet et un second trajet, le premier trajet ne traversant pas la bobine, le second trajet traversant la bobine et en poursuivant autour de la bobine par l'intermédiaire de l'élément ferromagnétique externe : le déplacement de la masse centrale selon le premier axe entrainant la modification du trajet d'au moins un des flux magnétiques depuis le premier trajet vers le second trajet ou inversement.

Par « le ressort permettant le déplacement de la masse centrale par rapport au support selon un premier axe », il est entendu que le ressort est capable de se déformer en réponse à une vibration, sa déformation entraînant un déplacement de la masse centrale selon un premier axe.

Par « flanqué d'un premier côté selon le premier axe et flanqué d'un second côté, opposé au premier côté selon le premier axe, par un second aimant, le premier aimant et le second aimant étant chacun flanqués selon le premier axe par un élément ferromagnétique supplémentaire », il est entendu que l'élément ferromagnétique central, le premier aimant, le second aimant et les éléments ferromagnétiques supplémentaires sont empilés axialement.

Par « le support entourant la masse centrale radialement au premier axe et un entrefer séparant le support de la masse centrale », il est entendu que le support est disposé autour et à distance de la masse centrale. Cette distance est suffisamment grande pour que des vibrations qui entraîneraient le mouvement de la masse centrale n'entraînent pas de frottements entre la masse centrale et le support. Cet entrefer ou cette distance dépend essentiellement de la différence de raideur entre la force magnétique radiale tendant à éloigner la masse de son axe de translation, et la force mécanique radiale liée aux ressorts tendant à compenser la raideur magnétique et ramener la masse sur son axe de translation. Si cette différence est positive alors il est nécessaire ou bien d'augmenter la raideur radiale des ressorts si cela est possible ou bien d'augmenter l'entrefer en question afin de diminuer la raideur magnétique. L'entrefer est fonction des dimensions de la masse centrale et doit être apprécié selon la marge de tolérance technique de sa méthode de fabrication et selon une tolérance de dilatation thermique selon l'environnement d'utilisation.

Par « une bobine enroulée autour de l'axe », il est entendu que la bobine est disposée radialement au premier axe.

Par « le flux magnétique du premier aimant et le flux magnétique du second aimant suivent chacun un trajet », il est entendu que la répartition spatiale du champ magnétique et notamment la majorité des lignes du champ magnétique sont guidées selon un trajet spécifique.

Dans « le premier trajet ne traversant pas la bobine » et « le second trajet traversant la bobine et en poursuivant autour de la bobine », il est entendu par « traverser la bobine » que les lignes du champ magnétique sont guidées de manière à traverser le plan radial dans lequel la bobine est disposée par rapport au premier axe. Par « autour de la bobine », il est entendu que les lignes du champ magnétique sont guidées pour former une boucle allant d'un pôle à l'autre d'un même aimant, la boucle s'enroulant autour de la bobine.

Le transducteur électromagnétique de la présente invention combine donc (i) le déplacement relatif d'une source magnétique, ici la masse centrale comprenant un premier aimant et un second aimant, par rapport à un bobinage, ici le support comprenant la bobine enroulée et (ii) une variation du champ magnétique créés par les aimants de la masse centrale selon les éléments ferromagnétiques qui sont en mouvement (éléments ferromagnétiques compris dans la masse centrale) ou non (éléments ferromagnétiques compris dans le support). De plus, le transducteur électromagnétique de la présente invention comprend un entrefer réduit au minimum, l'entrefer étant seulement suffisamment grand pour séparer le support de la masse centrale et permettre le mouvement de la masse centrale par rapport au support. Ces avantages permettent une amélioration considérable de la densité effective du transducteur électromagnétique ainsi que du facteur de qualité mécanique et du couplage. Egalement, les éléments ferromagnétiques permettent d'accroître la dérivée du flux magnétique par rapport au déplacement de la masse centrale ainsi que le coefficient de transduction.

Selon la présente invention, la bobine est située sur le support qui lors de l'utilisation du transducteur électromagnétique est fixe. Ainsi, la bobine ne subit pas le mouvement de la masse centrale et le risque de rupture par répétition de mouvement est réduit. Egalement, le transducteur électromagnétique de la présente invention est adapté pour que la masse centrale occupe un volume maximal dans le transducteur électromagnétique, ce qui permet de maximiser la densité effective et le couplage électromagnétique.

De plus, le transducteur électromagnétique de la présente invention peut être réalisé en utilisant des aimants de forme et de magnétisation standards, diminuant les coûts de fabrication ou d'assemblage ainsi que les coûts potentiels d'entretien.

En outre, le transducteur électromagnétique permet un déplacement de la masse centrale qui n'est limité que selon le premier axe et par le ressort, aucun autre élément compris dans le transducteur électromagnétique ne limitant la course de la masse centrale. Ainsi, le dimensionnement du transducteur électromagnétique de la présente invention est simple et indépendant du déplacement de la masse centrale.

Avantageusement, le ressort du transducteur électromagnétique de l'invention comprend un premier ressort fixé sur une face externe d'un des éléments ferromagnétiques supplémentaires et un second ressort fixé sur une face externe de l'autre élément ferromagnétique supplémentaire.

Avantageusement, le ressort du transducteur électromagnétique de l'invention comprend au moins un ressort plat s'étendant principalement dans un plan perpendiculaire au premier axe, étant préférablement un ressort en spirales à trois branches.

Avantageusement, la bobine du transducteur électromagnétique de l'invention est entièrement noyée dans l'élément ferromagnétique externe.

Avantageusement, la masse centrale du transducteur électromagnétique de l'invention est flanquée d'au moins un côté selon le premier axe par un troisième aimant et un élément ferromagnétique supplémentaire.

Avantageusement, le support du transducteur électromagnétique de l'invention comprend plusieurs bobines.

Avantageusement, les axes des pôles du premier et du second aimant du transducteur électromagnétique de l'invention sont inversés selon le premier axe.

Avantageusement, la masse centrale du transducteur électromagnétique de l'invention est cylindrique.

Avantageusement, le transducteur électromagnétique de l'invention comprend en outre une protection de la bobine.

L'invention concerne également un ensemble de transducteurs électromagnétiques tels que décrits précédemment, les bobines des transducteurs électromagnétiques étant reliées entre elles en parallèle et/ou en série.

### Brève description des figures

D'autres caractéristiques, détails et avantages de l'invention ressortiront à la lecture de la description faite en référence au dessin annexé donné à titre d'exemple et qui représente :
La figure 1 représente un modèle décrivant le comportement de modèle générique de récupérateurs à transduction électromagnétique sous hypothèse de petits déplacements, associé à un circuit d'adaptation d'impédance.
La figure 2 représente de façon schématique un transducteur électromagnétique dont la masse centrale est en position d'équilibre.
La figure 3 représente de façon schématique un transducteur électromagnétique dont la masse centrale est déplacée par rapport à la position d'équilibre et selon un premier axe.
La figure 4 représente de façon schématique un transducteur électromagnétique dont la masse centrale est déplacée par rapport à la position d'équilibre, selon un premier axe et inversement au déplacement de la masse centrale dans la figure 3.
La figure 5a représente un ressort plat en spirale à trois branches d'épaisseur 0,5 mm.
La figure 5b représente un ressort plat en spirale à trois branches d'épaisseur 1mm.

### Description détaillée de l'invention

Préférentiellement, le transducteur électromagnétique de la présente invention présente une structure essentiellement axisymétrique pouvant être contenue dans un volume simple tel qu'un cylindre. Ceci permet notamment de minimiser les effets de bord du champ magnétique, de minimiser le volume perdu par son conditionnement et de faciliter son intégration dans un contexte générique. En outre, la structure essentiellement axisymétrique du transducteur électromagnétique de la présente invention permet d'accélérer la convergence des simulations FEM nécessaires à son dimensionnement.

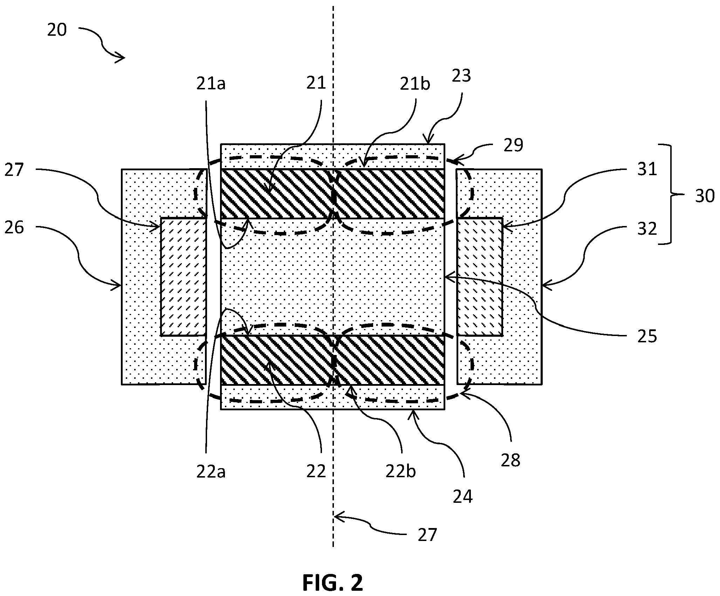

La figure 2 représente un transducteur électromagnétique 20 selon l'invention, étant notamment dans une position d'équilibre, de repos, c'est-à-dire la position à laquelle se situe la masse centrale lorsqu'aucune vibration n'affecte le transducteur électromagnétique. Le transducteur électromagnétique 20 comprend un élément ferromagnétique central 25 flanqué d'un premier côté selon le premier axe 27 par un premier aimant 21 ayant une face 21a en regard de l'élément ferromagnétique central 25 et une face opposée 21b. Ce premier aimant 21 est flanqué selon le premier axe 27 et en regard de sa face opposée 21b par un élément ferromagnétique supplémentaire 23. L'élément ferromagnétique 25 est flanqué d'un second côté selon le premier axe 27 et opposé au premier côté par un second aimant 22 ayant une face 22a en regard de l'élément ferromagnétique central 25 et une face opposée 22b. Ce second aimant 22 est flanqué selon le premier axe 27 et en regard de sa face opposée 22b par un élément ferromagnétique supplémentaire 24. Le premier aimant et le second aimant sont disposés de manière à ce que les faces opposées selon le premier axe constituent chacune un pôle, c'est-à-dire que la face 21a corresponde au pôle nord ou sud tandis que la face 21b corresponde au pôle opposé, de même pour les faces 22a et 22b.

Préférentiellement, les éléments formant la masse centrale, c'est-à-dire l'élément ferromagnétique central 25, le premier aimant 21, le second aimant 22 et les éléments ferromagnétiques supplémentaires 23, 24 sont des cylindres, de préférence des cylindres de révolution.

Le transducteur électromagnétique 20 comprend également un support 30 entourant la masse centrale radialement au premier axe et un entrefer séparant le support 30 de la masse centrale. Le support 30 comprend une bobine 31 enroulée autour du premier axe et solidaire d'un élément ferromagnétique externe 32. L'élément ferromagnétique externe 32 est notamment d'un seul bloc. En effet, lorsque l'élément ferromagnétique externe 32 est en plusieurs parties, la présence de jonctions entre ses parties peut perturber les flux magnétiques 28, 29. Lorsque la bobine 31 est enfermée au moins partiellement dans l'élément ferromagnétique externe 32, c'est-à-dire que chacune de ses faces est au moins partiellement recouverte par une partie de l'élément ferromagnétique externe 32, ce dernier ce doit alors d'être en plusieurs parties. L'élément ferromagnétique externe 32 peut notamment comprendre un logement ouvert sur la masse centrale 21 dans lequel est insérée la bobine 31, comme représenté. La bobine 31 peut notamment être affleurant à la surface de l'élément ferromagnétique externe 32 ou bien en retrait de de la surface de ce dernier. En particulier, la bobine est dimensionnée pour être en retrait de la surface de ce dernier, ce qui limite les jeux fonctionnels. En particulier, le logement est configuré pour que la bobine 31 soit disposée en regard seulement de l'élément ferromagnétique central 25 dans la position d'équilibre du transducteur électromagnétique 20, comme représenté. Ainsi, dans un mode de réalisation avantageux, la hauteur de la bobine 31 est inférieure ou égale à celle de l'élément ferromagnétique central 25. Le chemin des flux magnétiques 29, 29 des aimants 21, 22 n'est donc pas influencé par la bobine 31 dans la position d'équilibre du transducteur électromagnétique 20. Il n'est alors pas nécessaire de recouvrir la bobine 31 partiellement sur la face en regard de la masse centrale 21 par un élément ferromagnétique, ce recouvrement étant réalisé dans le but d'éviter une modification du flux magnétique 28, 29 du premier et du second aimants 21, 22 dans la position d'équilibre. Ainsi, avantageusement, comme la bobine 31 n'est pas recouverte sur sa face en regard de la masse centrale 21, et l'entrefer séparant ces deux éléments est dès lors plus faible qu'avec un recouvrement, et le transducteur électromagnétique 20 se retrouve plus compact. De par cet entrefer plus faible, comme il est décrit en détail plus loin, le passage des flux magnétiques 28, 29 d'un chemin court (où ils ne traversent pas la bobine 31) à chemin long (où ils traversent la bobine 31) est plus facile et donc le transducteur électromagnétique 20 est plus performant. Dans le mode particulier de la figure 2, la bobine 31 se situe au plus proche radialement de la masse centrale et l'élément ferromagnétique externe entoure la bobine radialement et selon le premier axe, c'est-à-dire que seule une partie centrale de la face du support 30 la plus proche radialement de la masse centrale comprend la bobine.

Dans l'invention, la bobine 31 joue avantageusement à la fois le rôle de générateur de courant, par la modification du chemin des flux magnétiques 28, 29, et à la fois d'isolant, ce qui permet de réduire l'entrefer séparant la masse centrale 21 de la bobine 31 et donc d'obtenir un transducteur électromagnétique 20 compact.

Le flux magnétique 29 du premier aimant 21 décrit une boucle allant d'un pôle de celui-ci à un autre, c'est-à-dire d'une face 21a à une face 21b ou inversement, et étant guidées par l'élément ferromagnétique central 25, l'élément ferromagnétique externe 32 et l'élément ferromagnétique supplémentaire 23. Le flux magnétique 29 ne traverse pas la bobine 31. Le flux magnétique 28 du second aimant 22 décrit une boucle allant d'un pôle de celui-ci à un autre, c'est-à-dire d'une face 22a à une face 22b ou inversement, et étant guidées par l'élément ferromagnétique central 25, l'élément ferromagnétique externe 32 et l'élément ferromagnétique supplémentaire 24. Le flux magnétique 28 ne traverse pas la bobine 31.

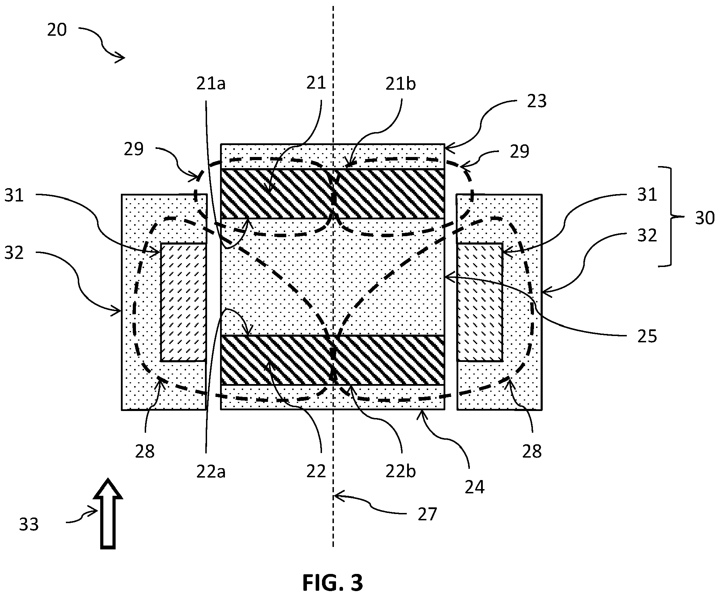

La figure 3 représente un transducteur électromagnétique 20 similaire au transducteur électromagnétique de la figure 2 mais dont la masse centrale n'est pas dans une position de repos. Suite à une vibration, le ressort a pu être déformé et la masse centrale s'est déplacée par rapport au support selon le premier axe 27 et selon la direction 33. Lors de cette vibration, le déplacement de la masse centrale entraîne une modification d'au moins un des trajets suivis par le flux magnétique d'un des aimants par rapport à la bobine 31. Ainsi, la bobine 31 se retrouve au moins partiellement en regard du premier aimant 21 ou du second aimant 22, ce qui influe sur le chemin du flux magnétique 28, 29 correspondant. Dans la figure 3, la bobine 31 est partiellement en regard du second aimant 22 et le flux magnétique 28 du second aimant 22 est modifié et traverse la bobine 31, poursuivant autour de la bobine 31, guidée par l'élément ferromagnétique central 25, l'élément ferromagnétique externe 32 et l'élément ferromagnétique supplémentaire 24. La modification du trajet du flux magnétique 28 entraîne une augmentation du couplage électromagnétique et donc augmente la bande-passante effective du transducteur électromagnétique, sous réserve que celui-ci soit associé à un circuit d'adaptation d'impédance.

Suite à ce déplacement de la masse centrale selon le premier axe 27 par rapport au support 30 et selon une direction 33, la masse centrale se déplacera dans la direction du premier axe 27 selon un mouvement d'oscillation autour de sa position d'équilibre, ce qui entrainera à nouveau la modification du trajet du flux magnétique 28 vers le chemin court dans la mesure où la bobine 31 ne sera plus en regard du second aimant 22, et, si le déplacement de la masse central est suffisant, entrainera la mise en regard de la bobine 31 avec le premier aimant 21 et la modification du trajet du flux magnétique 29 du premier aimant de manière à ce que celui traverse la bobine 31.

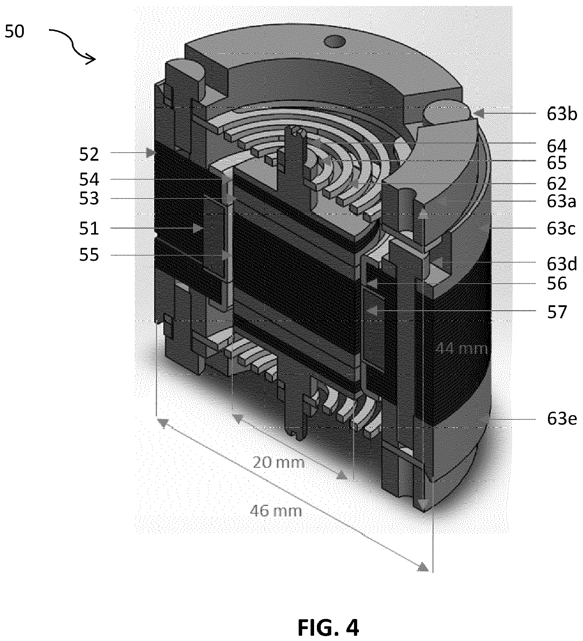

La figure 4 représente un transducteur électromagnétique 50 comprenant une bobine 51, un élément ferromagnétique externe 52, un premier aimant 53, un élément ferromagnétique supplémentaire 54 et un élément ferromagnétique central 55. Le transducteur électromagnétique 50 comprend particulièrement une protection 56 en un matériau non ferromagnétique qui limite le risque de collage entre la masse centrale et l'élément ferromagnétique externe 52. Le transducteur électromagnétique 50 comprend un ressort plat 62 à trois branches qui relie le support à la masse centrale par l'intermédiaire d'une attache 64 et d'un écrou 65. L'attache 64 est liée à la masse centrale par un collage d'une extrémité de l'attache en forme de disque à la masse centrale. L'autre extrémité opposée de l'attache selon l'axe peut comprendre une tige filetée permettant de comprimer le ressort entre l'attache 64 et l'écrou 62. Le support comprend particulièrement un anneau 63c et un anneau 63e qui maintiennent l'élément ferromagnétique externe 52 au moyen d'une vis 63d. Le ressort 62 est lié au support en étant comprimé entre un anneau 63a et l'anneau 63c au moyen d'une vis 63b.

Le transducteur électromagnétique 50 selon la figure 4 comprend un support de bobine 57 facilitant la fabrication et la liaison de la bobine 51 avec l'élément ferromagnétique externe 52. Un tel support de bobine 57 peut être utilisé dans d'autres modes de réalisation de l'invention et n'est pas particulièrement lié au mode de réalisation de la figure 4. Notamment, le support de bobine 57 est facultativement lié à la protection 56.

Le transducteur électromagnétique 50 selon la figure 4 est un exemple de transducteur électromagnétique selon la présente invention et ne limite pas l'invention à cet exemple. Notamment, d'autres moyens de liaison entre la masse centrale et le support peuvent être utilisés. Egalement, le ressort peut être lié au support ou à la masse centrale par d'autres moyens, par exemple par soudure, collage ou encliquetage.

Les dimensions indiquées sur la figure 4, notamment une hauteur totale de 44 mm de hauteur, une largeur totale de 46mm et une largeur de la masse centrale de 20 mm sont données à titre indicatif et un transducteur électromagnétique selon l'invention peut avoir d'autres dimensions.

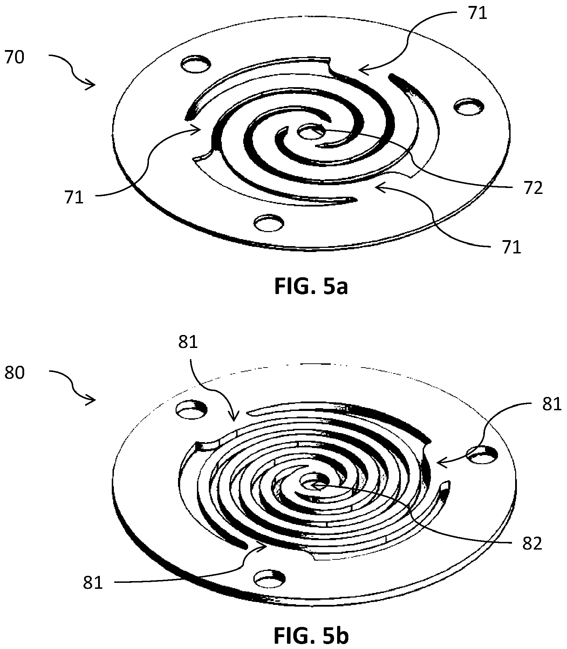

Les figures 5a et 5b représentent chacune un ressort plat à spirale à trois branches, formant un disque s'étendant radialement autour d'un axe passant par le milieu de chaque ressort. Le ressort plat 70 de la figure 5a comprend trois branches 71, les branches formant des spirales vers le milieu 72 du ressort 70. Les branches 71 du ressort 70 effectuent environ un tour autour de l'axe passant par le milieu 72 entre l'extérieur et l'intérieur du ressort par rapport à l'axe. D'après des simulations FEM, le ressort plat à spirale à trois branches de la figure 5a avec une épaisseur de 0,5 mm aurait une raideur axiale d'environ 16.8 N/mm et une raideur radiale de 803 N/mm. Le ressort plat 80 de la figure 5b comprend trois branches 81, les branches formant des spirales vers le milieu 82 du ressort 80. Les branches 81 du ressort 80 effectuent environ un tour et demi autour de l'axe passant par le milieu 82 entre l'extérieur et l'intérieur du ressort par rapport à l'axe. Les branches 81 du ressort 80 sont plus fines radialement à l'axe. L'épaisseur du ressort 70 est inférieure à l'épaisseur du ressort 80. D'après des simulations FEM, le ressort plat à trois branches de la figure 5b avec une épaisseur de 1 mm aurait une raideur axiale d'environ 16.8 N/mm et une raideur radiale de 57 N/mm.

Les ressorts 70, 80 des figures 5a et 5b sont des exemples de ressort que le transducteur électromagnétique de l'invention peut comprendre. Cependant d'autres ressorts, et particulièrement d'autres ressorts plats peuvent être utilisés pour mettre en œuvre l'invention. L'homme du métier saurait adapter l'épaisseur du ressort plat, le nombre de branches, le nombre de tour qu'effectuent les branches entre l'extérieur et l'intérieur du ressort par rapport à l'axe et le ou les matériaux des ressorts en fonction de l'environnement dans lequel doit être utilisé le transducteur électromagnétique et en fonction des contraintes dimensionnelles.

Les ressorts plats en spirale à trois branches présentes peuvent être dimensionnés de sorte à avoir une raideur axiale suffisamment faible pour que la fréquence de résonance naturelle soit proche de 50 Hz. De manière opposée, la raideur radiale de tels ressorts plats est suffisamment forte pour guider la masse centrale le long du premier axe sans que la masse centrale et le support n'entrent en contact physique, c'est-à-dire sans collage.

En supposant un facteur de qualité d'un transducteur électromagnétique selon la présente invention à 100, une fréquence de résonance de 50 Hz et que ce transducteur électromagnétique est soumis à une vibration dont l'amplitude en accélération équivaut à 0,5 m/s² tandis que la fréquence est définie sur une plage centrée autour de 50 Hz, une estimation de la puissance récupérable peut être obtenue. En prenant l'exemple d'un volume du plus petit cylindre pouvant contenir le transducteur électromagnétique étant de 73 cm², la densité de puissance normalisée maximale serait de l'ordre de 28 kg.s/m³. Selon cet exemple la bande passante effective à -3 dB équivaut à 4,2 Hz

Différents transducteurs électromagnétiques présentés ici peuvent être utilisés en groupe plutôt qu'individuellement, de manière à former un ensemble. Il n'est pas nécessaire que ces transducteurs électromagnétiques soient identiques et des transducteurs électromagnétiques selon différents modes de réalisation présentés ici peuvent être utilisés ensemble sans limitations. Ils peuvent notamment être disposés en série ou en parallèle. Particulièrement, les bobines des transducteurs électromagnétiques d'un même ensemble peuvent être reliées en série et/ou en parallèle.

Les différents modes de réalisation présentés dans cette description ne sont pas limitatifs et peuvent être combinés entre eux. En outre, la présente invention n'est pas limitée aux modes de réalisation précédemment décrits mais s'étend à tout mode de réalisation entrant dans la portée des revendications.

## Revendications

1. Transducteur électromagnétique (20) comprenant un support (30), une masse centrale (21, 22, 23, 24, 25), et au moins un ressort reliant la masse centrale au support, le ressort permettant le déplacement de la masse centrale par rapport au support selon un premier axe (27),
la masse centrale comprenant un élément ferromagnétique central (25), un premier aimant (21), un second aimant (22), et deux éléments ferromagnétiques supplémentaires (23, 24), l'élément ferromagnétique étant flanqué d'un premier côté selon le premier axe par le premier aimant (21) et flanqué d'un second côté, opposé au premier côté selon le premier axe, par le second aimant (22), le premier aimant et le second aimant étant chacun flanqué selon le premier axe par un des éléments ferromagnétiques supplémentaires (23, 24),
le support (30) entourant la masse centrale radialement au premier axe et un entrefer séparant le support de la masse centrale, le support comprenant au moins une bobine (31) enroulée autour du premier axe et solidaire d'un élément ferromagnétique externe (32),
le transducteur électromagnétique étant configuré de manière à ce que le flux magnétique (29) du premier aimant (21) et le flux magnétique (28) du second aimant (22) suivent chacun un trajet parmi un premier trajet et un second trajet, le premier trajet ne traversant pas la bobine, le second trajet traversant la bobine et en poursuivant autour de la bobine (31) par l'intermédiaire de l'élément ferromagnétique externe,
le déplacement de la masse centrale selon le premier axe entrainant la modification du trajet d'au moins un des flux magnétiques (28, 29) depuis le premier trajet vers le second trajet ou inversement.

2. Le transducteur électromagnétique (20) selon la revendication 1, le ressort comprenant un premier ressort fixé sur une face externe d'un des éléments ferromagnétiques supplémentaires (23, 24) et un second ressort fixé sur une face externe de l'autre élément ferromagnétique supplémentaire (23, 24).

3. Le transducteur électromagnétique (20) selon l'une des revendications, le ressort comprenant au moins un ressort plat (70, 80) s'étendant principalement dans un plan perpendiculaire au premier axe (27), étant préférablement un ressort en spirales à trois branches (71, 81).

4. Le transducteur électromagnétique (20) selon l'une des revendications précédentes, la bobine (31) étant entièrement noyée dans l'élément ferromagnétique externe (32).

5. Le transducteur électromagnétique (20) selon l'une des revendications précédentes, la masse centrale étant flanquée d'au moins un côté selon le premier axe (27) par un troisième aimant et un élément ferromagnétique supplémentaire.

6. Le transducteur électromagnétique (20) selon la revendication 5, le support (30) comprenant plusieurs bobines (31).

7. Le transducteur électromagnétique (20) selon l'une des revendications précédentes, les axes des pôles du premier et du second aimant étant inversés selon le premier axe (27).

8. Le transducteur électromagnétique (20) selon l'une des revendications précédentes, la masse centrale étant cylindrique.

9. Le transducteur électromagnétique (50) selon l'une des revendications précédentes, comprenant en outre une protection (57) de la bobine (1).

10. Ensemble de transducteurs électromagnétiques selon l'une des revendications précédentes, les bobines des transducteurs électromagnétiques étant reliées entre elles en parallèle et/ou en série.
